# FASCICULE DE BREVET EUROPEEN

(11) **EP 1 618 015 B1**
(45) Date de publication et mention de la délivrance du brevet: **27.12.2006**
(21) Numéro de dépôt: 04742581.4
(22) Date de dépôt: 27.04.2004
(51) Int. Cl.: B60K 1/04

(54) **VEHICULE AUTONOME A TRACTION ELECTRIQUE**
UNABHÄNGIGES FAHRZEUG MIT ELEKTRISCHEM ANTRIEB
ELECTRICALLY-POWERED AUTONOMOUS VEHICLE

(30) Priorité: 29.04.2003 FR 0305216
(43) Date de publication de la demande: 25.01.2006
(73) Titulaire: R&D Industries Société à responsabilité limitée, 78490 Galluis (FR); Delamour, Dominique, 78490 Les Mesnuls (FR); Rodi, Olivier, 78950 Gambais (FR)
(72) Inventeur: CHENE, Richard, F-92200 Neuilly-sur-Seine (FR); DELAMOUR, Dominique, F-78490 Les Mesnuls (FR); RODI, Olivier, F-78950 Gambais (FR)
(74) Mandataire: Sauvage, Renée
(86) Numéro de dépôt international: PCT/FR2004/001014
(87) Numéro de publication internationale: WO 2004/096594

(56) Documents cités:
- EP-A- 0 040 111
- DE-A- 4 105 246
- FR-A- 864 977
- FR-A- 2 737 694

## Description

La présente invention a pour objet un véhicule autonome à traction électrique nécessitant pour son alimentation une masse et/ou un volume important de batteries, par exemple, un véhicule utilitaire ou un véhicule de transport en commun.

Malgré la disponibilité de batteries performantes (NiMH, Lithium-ions, etc.), il est pratiquement impossible de concevoir des véhicules autonomes à grande capacité d'emport et qui soient "tout électriques", en raison de problèmes de stockage de l'électricité et d'autonomie du véhicule.

En outre, un sérieux obstacle à la mise en service de véhicules autonomes à traction électrique tient au fait que les variantes technologiques, en matière de batteries, sont nombreuses, complexes, coûteuses, rapidement dépassées et qu'elles nécessitent le plus souvent des équipements spécifiques dans les ateliers d'entretien. Ces contraintes sont incompatibles avec les besoins des opérateurs du transport des personnes et/ou des marchandises qui ont la nécessité d'amortir leurs investissements en matériels roulants sur une période comprise entre 10 et 20 ans.

Pour pallier les problèmes de stockage de l'électricité et d'autonomie du véhicule, il est actuellement nécessaire que les véhicules équipés de telles batteries soient munis de dispositifs de recharge rapide et/ou de groupes électrogènes embarqués et aptes à fournir un complément d'énergie.

Il a également été imaginé des véhicules à traction électrique dont les batteries sont installées sur une remorque comme, par exemple, dans US-A-3 690 397, DE-A-42 05 327, DE-A-41 05 246 ou FR-A-2 482 528.

Pour un véhicule utilitaire à traction électrique, il faut pouvoir disposer d'une charge utile importante et, donc, d'un volume de batteries suffisant (compris entre 1,5 et 3 m³). L'évolution technique tend à ce que les batteries fournissent plus d'énergie pour, parfois, moins de poids, mais leur volume reste à peu près inchangé. Avec des batteries au plomb, un volume d'environ 2 m³ correspond à une masse d'environ 3 tonnes.

L'art antérieur rappelé plus haut divulgue de petites remorques munies d'une unique roue (US-A-3 690 397, DE-A-42 05 327 ou DE-A-41 05 246 précités), solution qui n'est pas transposable au remorquage d'une masse importante de batteries telle qu'évoquée ci-dessus, car cela nécessiterait d'utiliser une roue large (de l'ordre de 400 mm) et de grand diamètre (de l'ordre de 1200 mm) dont le débattement, si la roue est pivotante, comme dans US-A-3 690 397, réduirait considérablement le volume disponible pour les batteries. En outre, même si elle n'était pas pivotante, comme dans DE-A-42 05 327, le fait qu'elle soit unique ne présenterait que des inconvénients, appliquée à une remorque connectable/déconnectable :
- manque de stabilité durant les manoeuvres,
- nécessité de prévoir des moyens de guidage et de suspension complexes, encombrants et coûteux,
- entretien difficile, et
- difficulté de réparation en cas de crevaison.

DE -A-41 05 246, précité incluant les caractéristiques du préambule de la revendication indépendante divulgue une remorque dont la ou les roues, non directrice(s), sont situées entre les roues, non directrices également, du véhicule et sur le même axe transversal. La remorque est guidée transversalement mais peut débattre verticalement, un dispositif élastique étant disposé entre le châssis du véhicule et la remorque et faisant office de suspension.

Cette conception ne fonctionne cependant correctement que dans des conditions idéales car :
- lorsque la remorque franchit un ralentisseur, elle peut être écrasée par le châssis du véhicule ; et
- à l'amorce d'un virage en dévers, le châssis du véhicule va s'incliner transversalement par rapport à la remorque et des efforts considérables vont s'exercer sur le dispositif de guidage transversal de la remorque.

Par suite, il ne peut être considéré que le fonctionnement de l'invention objet de DE -A-41 05 246 est fiable.

L'art antérieur (FR-A-2 482 528 précité) a également divulgué l'adjonction d'une remorque, munie d'un essieu à deux roues, à un véhicule utilitaire, mais l'encombrement de cette remorque vient s'ajouter à celui du véhicule, avec pour résultat une perte considérable de place en circulation et au dépôt.

La mise en place des batteries sur un châssis indépendant permet d'envisager la constitution, au dépôt des véhicules, d'un parc de châssis de batteries chargées aux fins de procéder à un échange entre châssis de batteries en voie d'épuisement et châssis de batteries chargées, mais aucun document de l'art antérieur ne décrit ni ne suggère de moyens permettant de rendre rapides la connexion et la déconnexion de la remorque pour effectuer un tel échange, en particulier lorsque ladite remorque se situe sous le châssis du véhicule.

L'invention se propose de répondre aux besoins des opérateurs en matière d'amortissement de leurs équipements en exploitant le principe de la dissociation du composant "batteries" d'avec le véhicule proprement dit, comme cela a déjà été imaginé dans l'art antérieur, mais en remédiant aux inconvénients et insuffisances dudit art antérieur et, ce,
- en intégrant le volume de batteries au véhicule, c'est-à-dire en incluant la remorque dans les limites de l'encombrement du véhicule (ou n'en autorisant qu'un léger débordement), sans pour autant introduire de dénivellation dans le plancher du véhicule, qui devra être un plancher plat ; et
- en permettant une interchangeabilité rapide (en environ 10 minutes) des remorques.

Ces objectifs sont atteints par l'invention qui s'applique aux véhicules utilitaires, comportant, d'une manière connue en soi, des batteries supportées par un châssis indépendant, lui-même muni d'au moins un essieu équipé de roues et qui est adapté à être reçu dans un logement défini sous le châssis du véhicule, des moyens de connexion étant prévus entre le châssis de batteries et le châssis du véhicule, lesdits moyens de connexion comprenant, d'une part, des moyens de verrouillage entre le châssis de batteries et le châssis de véhicule et, d'autre part, une interface côté châssis de batteries et une interface côté châssis de véhicule incluant des prises de transmission de l'énergie et/ou de commandes ou d'informations.

Selon l'invention, lesdites interfaces comportent chacune, en outre, les parties complémentaires mâle et femelle d'au moins un organe de centrage et d'au moins un organe d'emboîtement, l'interface côté châssis de véhicule étant constituée par un plateau indépendant dudit châssis et réuni à lui en au moins trois points, dont deux sont contrôlés par des vérins et dont le troisième revêt la forme d'une rotule.

Dans une forme de réalisation pratique, ledit organe de centrage revêt la forme de deux parties complémentaires mâle et femelle à emboîtement conique, et ledit organe d'emboîtement revêt la forme de deux parties complémentaires mâle et femelle à emboîtement cylindrique, ledit organe de centrage et ledit organe d'emboîtement étant avantageusement constitués par deux parties distinctes d'une même pièce.

Sachant que le châssis de batteries a un plan de symétrie longitudinal perpendiculaire à son ou ses essieux et un plan transversal perpendiculaire audit plan longitudinal, le dispositif de connexion comporte avantageusement une paire d'organes d'emboîtement et une paire d'organes de centrage, lesquelles paires sont symétriques par rapport audit plan longitudinal. Un organe de centrage d'une paire et un organe d'emboîtement d'une paire pouvant être constitués, là encore, par deux parties distinctes d'une même pièce, on comprend qu'il peut y avoir deux telles pièces symétriques de part et d'autre dudit plan longitudinal.

Les parties mâles des organes de centrage et d'emboîtement peuvent être prévues sur la face du châssis de batteries adaptée à être connectée au châssis de véhicule et les parties complémentaires femelles être prévues sur le plateau d'interface, ou vice versa.

Quelle que soit la forme d'exécution retenue, grâce à ces organes d'emboîtement et de centrage, le châssis de batteries est facilement positionné par rapport au châssis de véhicule.

Dans une forme d'exécution de l'invention, l'organe de verrouillage est constitué par une tige filetée à tête qui traverse le châssis de batteries, selon une direction parallèle à son plan longitudinal ou à son plan transversal, et qui est solidarisable au plateau d'interface.

En pratique, il peut être prévu une paire de telles tiges filetées à tête adaptées à traverser de bout en bout le châssis de batteries et le plateau d'interface, parallèlement au plan longitudinal du châssis de batteries, et à être immobilisée en place par vissage dans un écrou. Ainsi le châssis de batteries et le plateau d'interface sont bloqués entre la tête des vis et les écrous, les tiges filetées formant tirants.

De préférence, les tiges filetées sont coaxiales auxdits organes d'emboîtement et/ou de centrage et les traversent.

En variante, il peut être prévu une tige filetée adaptée à traverser, parallèlement au plan transversal du châssis de batteries, le ou les organes de centrage et/ou d'emboîtement et, d'un bord latéral à l'autre, le plateau d'interface tandis que les parties complémentaires desdits organes de centrage et/ou d'emboîtement sont accouplés, ladite tige étant immobilisable en place par vissage dans un écrou.

Avantageusement, les prises de transmission de l'énergie et/ou de commandes ou d'informations du véhicule au châssis de batteries sont intégrées dans ledit au moins un organe de centrage et/ou d'emboîtement, ce qui accélère encore la connexion, le centrage et l'emboîtement aboutissant du même coup à l'enfilage des prises mâles dans les prises femelles.

Pour en venir au plateau d'interface, les vérins et la rotule dont il est muni permettent de d'amortir et d'absorber les variations d'alignement ou de niveau entre le châssis de batteries et le châssis de véhicule qui se produisent inévitablement lorsque l'ensemble roule, par suite des inégalités de chaussée et autres.

Dans une forme d'exécution particulière de l'invention, lesdits vérins sont asservis à la direction et/ou à la marche avant/marche arrière du véhicule, pour agir sur le comportement du châssis de batteries depuis le poste de conduite du véhicule, ce qui peut être particulièrement utile en cas de manoeuvre en marque arrière.

Dans une forme d'exécution avantageuse de l'invention, l'extrémité du châssis de batteries opposée à son interface de connexion avec le châssis de véhicule est grossièrement convexe, telle qu'observée depuis le dessus dudit châssis. Une telle géométrie absorbe mieux les chocs arrière.

Pour en venir au moteur de traction du véhicule, il peut être situé dans le véhicule et, de préférence, une réserve auxiliaire de batteries est prévue dans le véhicule pour permettre de déplacer le véhicule sur un court trajet lorsqu'il est déconnecté du châssis de batteries.

En variante, pour réduire le coût et le poids du véhicule, ainsi que faciliter la maintenance, le moteur de traction du véhicule est porté par le châssis de batteries, la force motrice étant alors transmise au véhicule via un arbre moteur. Dans ce cas, un moteur auxiliaire peut être incorporé au véhicule afin que, là encore, il puisse être déplacé sur une courte distance alors que le châssis de batterie en est détaché. Si le moteur auxiliaire est un moteur électrique, une réserve auxiliaire de batteries doit également être prévue dans le véhicule.

Comme indiqué plus haut, le châssis de batteries est reçu dans un logement défini sous le châssis du véhicule. Ce logement peut être défini sous l'extrémité arrière du châssis du véhicule, ce qui facilite l'accès pour sa connexion et sa déconnexion.

Dans ce cas, le châssis de batteries peut s'inscrire dans le profil général du véhicule ou dépasser de l'arrière du véhicule et être muni d'un dispositif d'amortissement et/ou d'absorption des chocs dans sa partie arrière et/ou dans son dispositif de connexion. De cette manière, le châssis de batteries assure une protection de l'arrière du véhicule, et/ou du fond du logement, vis-à-vis des chocs.

Dans un mode de réalisation particulier, le châssis de batteries est muni d'un dispositif de connexion situé à l'arrière du châssis de batteries. Cette disposition permet d'atteler cette extrémité du châssis de batteries à un engin pour le manoeuvrer, aux fins de connexion ou de déconnexion de l'autre extrémité avec, ou d'avec, le châssis du véhicule.

Le châssis de batteries peut, en outre, soit être équipé d'un chargeur, ce qui permet de recharger les batteries en tous points où le chargeur pourra être branché sur une alimentation électrique (terminus ou point d'arrêt intermédiaire de la ligne), soit supporter un dispositif de transformation d'énergie adapté à recharger les batteries. Ce dispositif peut être un alternateur actionné par un moteur thermique ou des volants à inertie, ce qui revient à équiper le châssis d'un groupe électrogène capable de recharger les batteries à la demande et, donc, de prolonger l'autonomie du véhicule.

L'invention sera mieux comprise à la lecture de la description détaillée ci-après des dessins annexés dans lesquels :
- la figure 1 est une représentation schématique d'un véhicule autonome à traction électrique selon l'invention, sans châssis de batteries ;
- les figures 2a et 2b sont des représentations schématiques du châssis de batteries selon l'invention, observé côté extrémité de raccordement au châssis de véhicule (figure 2a) et côté extrémité de raccordement à un engin de manoeuvre (figure 2b) ;
- la figure 3 est une représentation schématique de la mise en place du châssis de batteries dans le logement du véhicule autonome à traction électrique de l'invention ;
- la figure 4 est une représentation schématique du véhicule autonome à traction électrique selon l'invention, le châssis de batteries étant en place ;
- la figure 5 est une représentation schématique du véhicule autonome à traction électrique selon l'invention, muni d'un châssis de batteries selon une variante d'exécution ;
- la figure 6 est une vue en perspective éclatée d'une forme d'exécution du châssis de batteries et du plateau d'interface, observés depuis le côté de raccordement à un engin de manoeuvre du châssis de batteries ;
- la figure 7 est une vue en perspective des mêmes éléments qu'à la figure 6, mais observés dans la direction opposée ;
- la figure 8 est une vue en perspective partielle du châssis de véhicule vu du dessous, avec le plateau d'interface en place ;
- la figure 9 est une vue semblable à la figure 7, mais portant sur une autre forme d'exécution de l'invention ;
- la figure 10 est une vue semblable à la figure 9, mais montrant une autre forme de réalisation des organes de centrage et d'emboîtement ; et
- la figure 11 est une vue en perspective et en coupe d'une autre forme d'exécution encore du châssis de batteries.

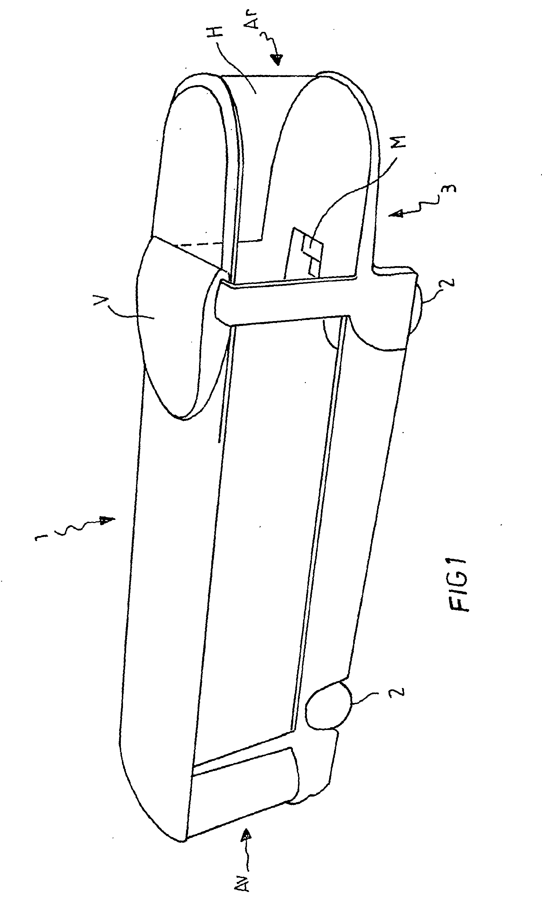

La figure 1 représente un véhicule autonome à traction électrique 1 comportant un châssis muni de deux essieux équipés chacun d'une paire de roues 2, et dont l'avant est désigné par Av et l'arrière par Ar. Le châssis du véhicule définit, côté arrière, un logement 3, situé sous une partie surélevée d'habitacle H et adapté à recevoir un châssis de batteries. Le moteur du véhicule est situé entre les roues du véhicule (sous les marches M d'escalier dans la forme d'exécution représentée) ou, mieux, dans les roues elles-mêmes (les moteurs-roues électriques sont connus dans la technique et il est inutile de les décrire ici). Le volume V disponible en toiture peut être utilisé pour héberger des dispositifs de refroidissement, des équipements informatiques embarqués et/ou une réserve d'énergie complémentaire. On peut, en outre, y disposer des équipements spécifiques au service, par exemple, une climatisation, des moyens de chauffage à alcool, au gaz ou au fioul (dans l'état actuel de la technique, les véhicules électriques ne sont généralement pas chauffés électriquement en raison de l'encombrement, du poids et du coût des batteries), des antennes et autres systèmes de transmissions d'informations. Cette disposition en toiture permet évidemment de libérer le plus grand volume utile pour les passagers.

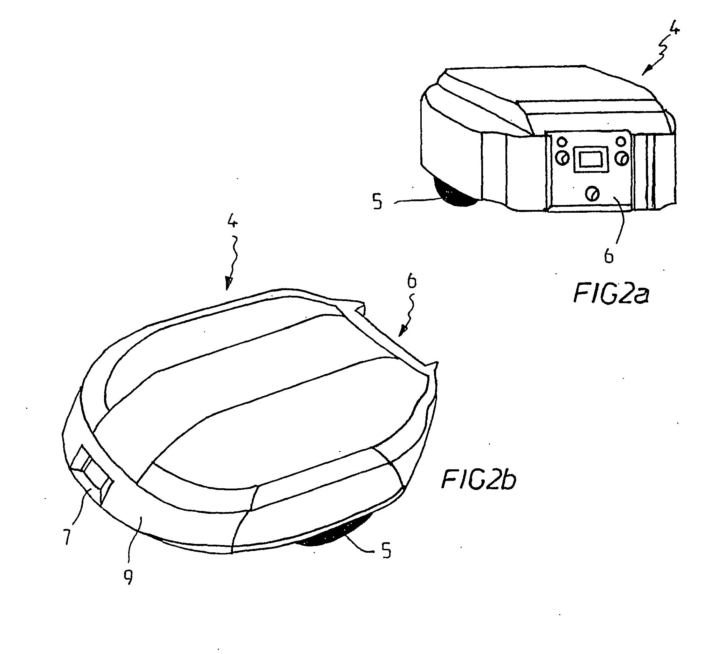

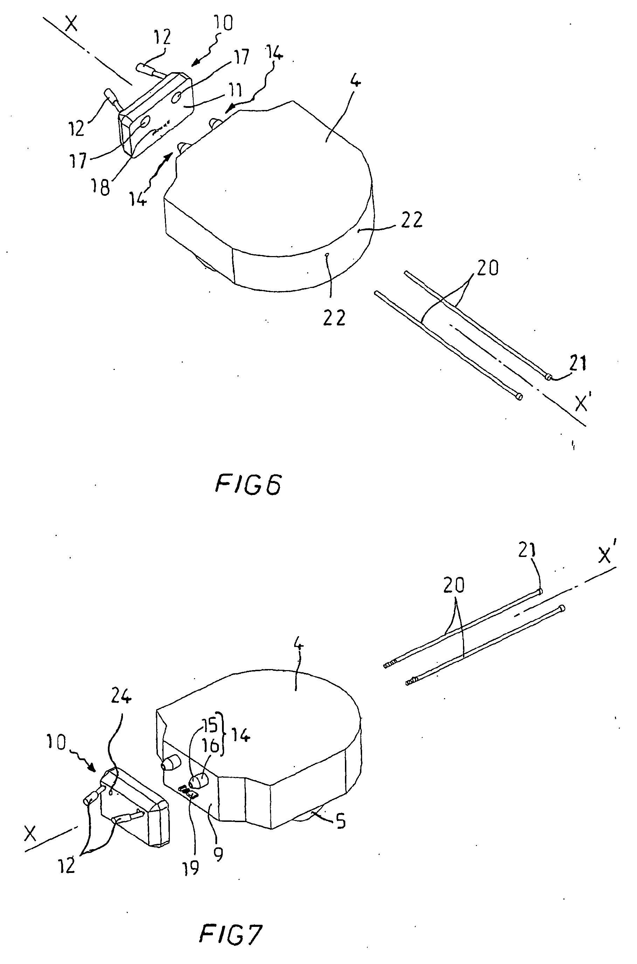

Le châssis de batteries 4 est représenté isolément aux figures 2a et 2b. Comme on le voit, il s'agit d'une remorque indépendante, munie d'un essieu équipé d'une paire de roues 5 et présentant, à l'une de ses extrémités, des moyens 6 de raccordement mécaniques - qui seront décrits en détail à propos des figures 6 à 9 -, électriques et électroniques au châssis de véhicule (Figure 2a) et, à son extrémité opposée (Figure 2b) des moyens de raccordement mécanique 7 à un engin de manoeuvre. Le châssis 4 est muni d'un pare-chocs 9. Les roues 5 peuvent avantageusement être équipées de dispositifs de freinage ou de ralentisseurs. En outre, le châssis de batteries est équipé de dispositifs de sécurité et moyens auxiliaires nécessaires au bon fonctionnement desdites batteries, en particulier pour le contrôle et le maintien de la température et la ventilation.

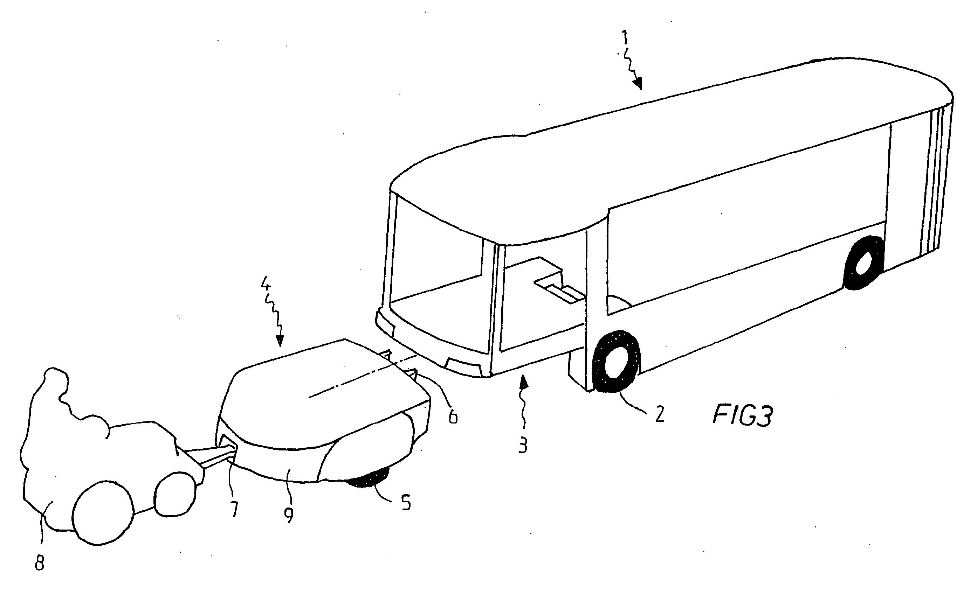

La figure 3 représente la mise en place du châssis de batteries 4 dans le logement 3 du véhicule autonome à traction électrique 1. Comme on le voit, le châssis de batterie 4 est connecté par son moyen de raccordement 7 à un engin 8 manoeuvré par un opérateur. Cet engin 8 pousse le châssis de batteries 4 dans le logement 3 jusqu'à ce que ses moyens de raccordement mécaniques et électriques 6 viennent en prise avec des moyens appariés prévus dans le fond du logement et non représentés dans cette figure.

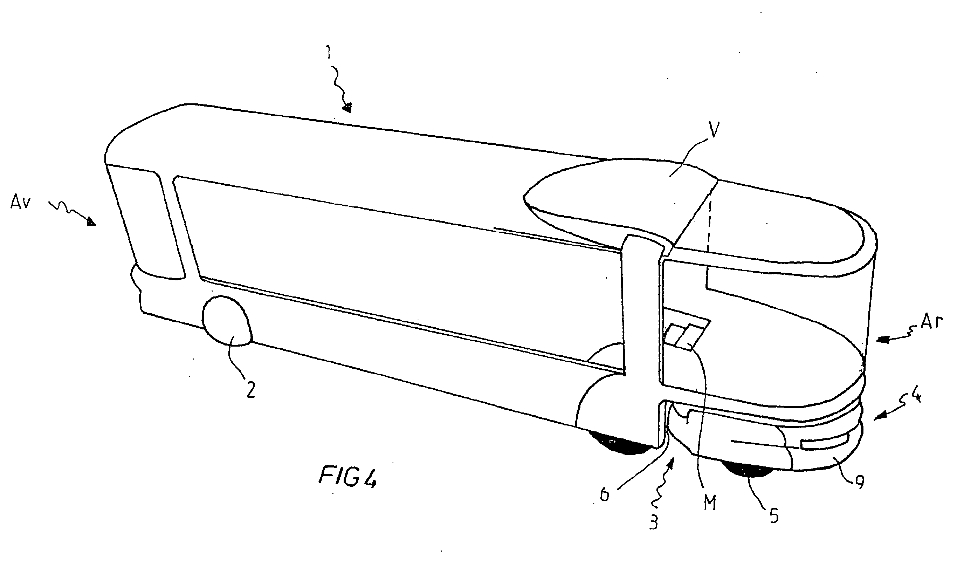

La figure 4 montre le châssis de batteries engagé dans le logement 3.

Comme on le voit, d'après la figure 4, les roues 5 de l'essieu du châssis de batteries 4 sont placées dans le prolongement des roues 2 des essieux du châssis du véhicule 1 de sorte qu'elles roulent sensiblement dans leur trace. On constate également que l'aspect général du véhicule selon l'invention est sensiblement le même que celui des autobus courants.

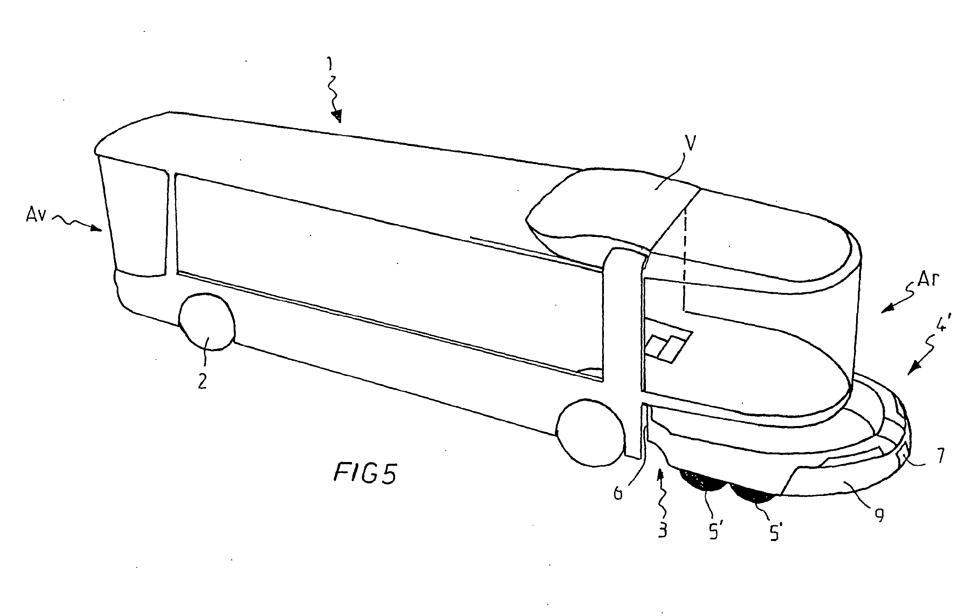

Dans la variante de la figure 5, il est fait usage d'un châssis 4' qui diffère du châssis 4 en ce sens qu'il comporte deux essieux dont chacun est pourvu d'une paire de roues, telles que 5', et qu'il est plus long que le châssis 4. Le châssis 4' déborde donc à l'arrière du véhicule. Un tel châssis allongé permet de loger davantage de batteries et le surplus de batteries pourrait être supporté par des roues plus grandes au lieu de l'être par des roues plus nombreuses, comme représenté ici. Il est bien entendu qu'un même véhicule peut, selon les besoins, être équipé d'un châssis de batterie court ou long, équipé de batteries classiques ou de piles à combustibles, sans nécessiter de modification.

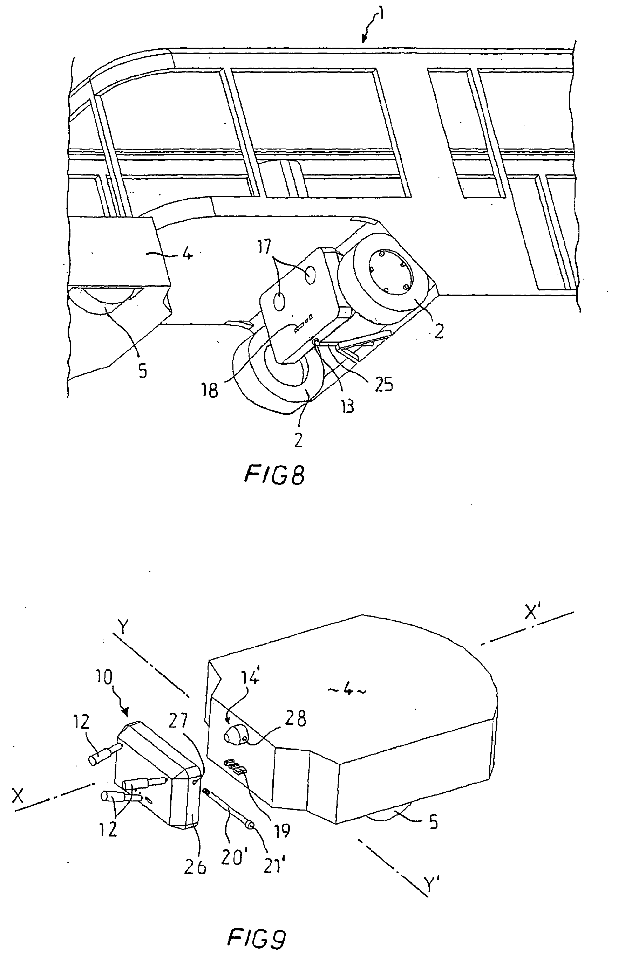

Si l'on en vient aux figures 6 à 8, on voit plus clairement l'interface côté châssis de batteries et de l'interface côté châssis de véhicule. L'interface côté châssis de batteries 4 est constituée par la face d'extrémité 9 dudit châssis depuis laquelle font saillie les moyens de raccordement mécaniques, électriques et autres, désignés par 6 aux figures précédentes. L'interface côté châssis de véhicule est constituée d'un plateau 10 offrant une face 11 adaptée à recevoir lesdits moyens de raccordement et qui est solidarisé au châssis de véhicule par deux vérins 12 et une rotule 13 (voir figure 8).

Plus précisément, les moyens de raccordement mécaniques sont constitués, côté châssis de batteries 4, par une paire de pièces mâles 14 qui comportent une zone conique 15 formant organe de centrage et une zone cylindrique 16 formant organe d'emboîtement. Ces pièces 14 sont symétriques par rapport au plan de symétrie longitudinal du châssis de batteries 4 figuré en X-X'. A cette paire de pièces mâles 14 correspond une paire de cavités 17 de même géométrie prévues dans la face 11 du plateau d'interface 10, laquelle face 11 comporte également des douilles, telles que 18, adaptées à recevoir les fiches 19 saillant de l'interface et assurant la transmission de l'énergie ainsi que de commandes et d'information.

La solidarisation entre le châssis de batteries 4 et le plateau 10 est faite au moyen d'une paire de tiges filetée 20 à tête 21 qui sont enfilées, tout d'abord, dans des passages ménagés dans le châssis de batteries 4 et qui débouchent, d'un côté, sur la face du châssis opposée à la face 9, en 22 et, de l'autre côté, au centre des pièces 9, puis dans des passages ménagés dans le plateau 10 et qui débouchent, sur la face 11, en 23 et, sur la face opposée, en 24, après quoi l'extrémité desdites tiges, opposée à la tête 21 est vissée dans un écrou non représenté

La longueur des vérins 12 et du support 25 de la rotule 13 permet aisément un tel vissage ou dévissage. Il est bien entendu que, lorsque le châssis de batteries 4 est déconnecté du plateau 10, il n'est pas indispensable d'extraire les tiges 20 dudit châssis.

La forme d'exécution représentée à la figure 9 se distingue de la précédente par le fait qu'elle ne comporte qu'une pièce mâle de centrage et d'emboîtement 14' disposée dans le plan longitudinal X-X' du châssis de batteries 4, que le plateau d'interface 10 est connecté au châssis de véhicule par trois vérins 12 au lieu de deux, et par le mode de verrouillage entre le châssis de batteries 4 et le plateau d'interface 10. On utilise, cette fois, une unique tige filetée 20' à tête 21' adaptée à traverser, d'une part, le plateau 10 via un passage allant d'une face latérale 26 de celui-ci à l'autre et débouchant en 27, sur la face 26 visible, et, d'autre part, lorsque la pièce mâle de centrage et d'emboîtement 14' est accouplée avec une cavité correspondante ménagée dans le plateau 10, ladite pièce mâle via un passage ménagé transversalement dans ladite pièce et dont on ne voit que le débouché 28 à la figure 9, l'extrémité de la tige 20' opposée à la tête 21' étant vissée dans un écrou non représenté.

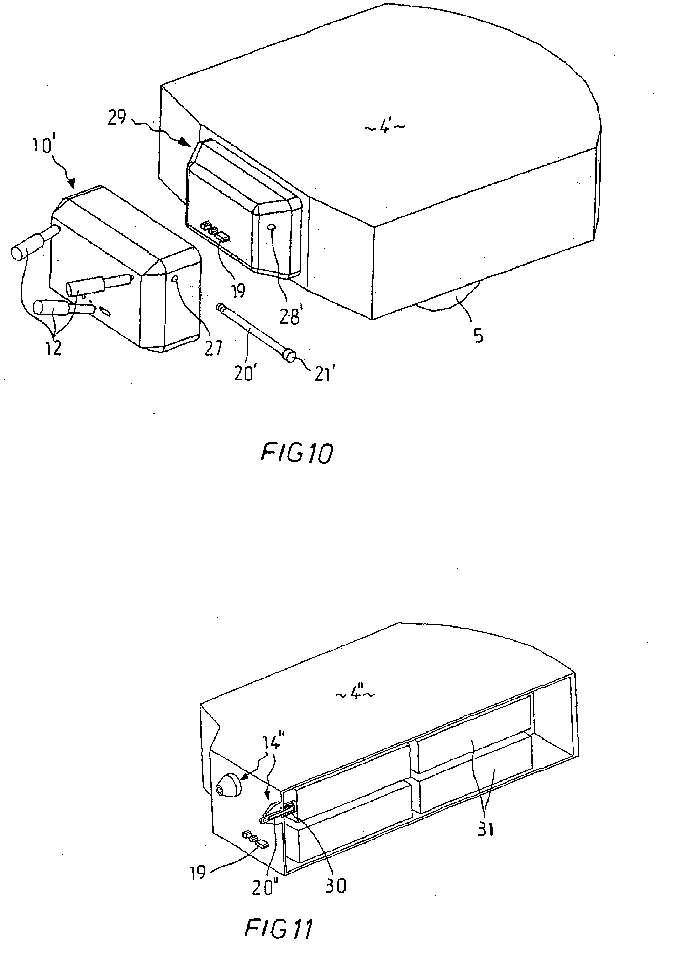

La forme d'exécution représentée à la figure 10 se distingue de celle de la figure 9 par le fait que les organes de centrage et d'emboîtement du châssis 4' ne sont pas constitués par une pièce cylindrico-tronconique 14', mais par une partie 29 en tronc de pyramide qui vient s'encastrer dans une cavité de géométrie correspondante ménagée sur la face non visible du plateau 10'.

Enfin, la figure 11 illustre une variante de réalisation de la forme d'exécution 4" du châssis de batterie représenté à la figure 7 : au lieu de comporter deux longues tiges filetées traversantes 20 manoeuvrables à la main, cette variante comporte une paire de courtes tiges filetées 20" actionnables, chacune, par un moteur électrique 30 et logées dans chacun des organes de centrage et d'emboîtement 14". Ainsi, les opérations de connexion et de déconnexion du châssis de batterie au châssis du véhicule sont plus rapides et peuvent être commandées depuis la cabine du véhicule ou automatisées. Cela évite, en outre, de devoir faire traverser le châssis, sur toute sa longueur, par les tiges filetées.

La référence 31 désigne les batteries portées par le châssis de batteries.

Quelle que soit la forme d'exécution retenue, en actionnant les vérins 12, il est possible de modifier l'adhérence des roues motrices 2 du véhicule : en "soulevant" le châssis de batteries au moyen des vérins 12, on soulage en effet les roues 5 dudit châssis et on transfère l'appui sur lesdites roues 2.

Par ailleurs, on comprendra que la masse des batteries, telles que 31, peut être répartie sur le châssis de batteries, de manière équilibrée par rapport aux roues 5 dudit châssis, de façon à faciliter les manoeuvres dudit châssis, une fois déconnecté du châssis de véhicule.

La présente invention n'est pas limitée aux formes d'exécution décrites et représentées. En particulier, le moteur du véhicule pourrait être lui aussi porté par le châssis 4 ou 4', un moteur auxiliaire étant dans ce cas prévu dans le véhicule pour pouvoir le déplacer sur une courte distance, lorsqu'il est dans la configuration de la figure 1. Par ailleurs, le véhicule électrique n'a pas nécessairement quatre roues comme représenté : il doit en avoir au moins trois, et peut en avoir plus de quatre. Il peut en effet s'agir d'un véhicule de grande capacité à double ou triple essieu.

Outre ses avantages techniques, la solution proposée présente un avantage commercial : en effet, en dissociant du véhicule les batteries et leur support, il est possible, en restant dans la même catégorie réglementaire de poids de véhicules, d'étendre le volume de l'habitacle et d'augmenter le nombre de voyageurs.

## Revendications

1. Véhicule autonome à traction électrique nécessitant pour son alimentation une masse et/ou un volume important de batteries, lesdites batteries (31) étant supportées par un châssis indépendant (4 ; 4' ; 4") qui est lui-même muni d'au moins un essieu équipé de roues (5 ; 5') et qui est adapté à être reçu dans un logement (3) défini sous le châssis du véhicule, le châssis de batteries (4 ; 4' ; 4") ayant un plan de symétrie longitudinal (X-X') perpendiculaire à son ou ses essieux et un plan transversal (Y-Y') perpendiculaire audit plan longitudinal, et des moyens de connexion étant prévus entre le châssis de batteries (4;4'; 4") et le châssis du véhicule, lesdits moyens de connexion comprenant, d'une part, des moyens de verrouillage entre le châssis de batteries (4 ; 4' ; 4") et le châssis de véhicule et, d'autre part, une interface côté châssis de batteries (4;4';4") et une interface côté châssis de véhicule incluant des prises de transmission de l'énergie et/ou de commandes ou d'informations, **caractérisé en ce que** lesdites interfaces comportent chacune, en outre, les parties complémentaires mâle et femelle d'au moins un organe de centrage et d'au moins un organe d'emboîtement, l'interface côté châssis de véhicule étant constituée par un plateau (10:10') indépendant dudit châssis et réuni à lui en au moins trois points, dont deux sont contrôlés par des vérins (12) et dont le troisième revêt la forme d'une rotule (13).

2. Véhicule selon la revendication 1, **caractérisé en ce que** lesdits vérins (12) sont asservis à la direction et/ou à la marche avant/marche arrière du véhicule.

3. Véhicule selon la revendication 1 ou 2., **caractérisé en ce que** ledit organe de centrage revêt la forme de deux parties complémentaires mâle (15) et femelle à emboîtement conique.

4. Véhicule selon l'une quelconque des revendications 1 à 3, **caractérisé en ce que** ledit organe d'emboîtement revêt la forme de deux parties complémentaires mâle (16) et femelle à emboîtement cylindrique.

5. Véhicule selon l'une quelconque des revendications 1 à 4, **caractérisé en ce que** ledit organe de centrage et ledit organe d'emboîtement sont constitués par deux parties distinctes d'une même pièce (14;14';14";29).

6. Véhicule selon l'une quelconque des revendications 1 à 5, **caractérisé en ce que** ledit dispositif de connexion comporte une paire d'organes d'emboîtement et une paire d'organes de centrage, lesquelles paire sont symétriques par rapport au plan longitudinal (X-X') du châssis de batteries (4 ; 4' ; 4").

7. Véhicule selon l'une quelconque des revendications 1 à 6, **caractérisé en ce que** ledit organe de verrouillage est constitué par un tige filetée (20;20';20") à tête qui traverse le châssis de batteries (4;4';4"), selon une direction parallèle à son plan longitudinal (X-X') ou à son plan transversal (Y-Y'), et qui est solidarisable au plateau d'interface (10;10').

8. Véhicule selon la revendication 7, **caractérisé en ce qu'**il comporte une paire de telles tiges filetées (20) à tête adaptées à traverser de bout en bout le châssis de batteries (4) et le plateau d'interface (10), parallèlement au plan longitudinal (X-X') du châssis de batteries (4;4';4"), et à être immobilisée en place par vissage dans un écrou.

9. Véhicule selon les revendications 6 et 8, prises conjointement, **caractérisé en ce que** lesdites tiges filetées sont coaxiales auxdits organes d'emboîtement et/ou de centrage et les traversent.

10. Véhicule selon la revendication 7, **caractérisé en ce qu'**il comporte une tige filetée (20';20") adaptée à traverser, parallèlement au plan transversal (Z-Z') du châssis de batteries (4;4';4"), le ou les organes de centrage et/ou d'emboîtement et, d'un bord latéral à l'autre, le plateau d'interface (10 ; 10') tandis que les parties complémentaires desdits organes de centrage et/ou d'emboîtement sont accouplés, ladite tige (20';20") étant immobilisable en place par vissage dans un écrou.

11. Véhicule selon l'une quelconque des revendications 1 à 10, **caractérisé en que** lesdites prises de transmission de l'énergie et/ou de commandes ou d'informations sont intégrées dans ledit au moins un organe de centrage et/ou d'emboîtement.

12. Véhicule selon l'une quelconque des revendications précédentes, **caractérisé en ce que** l'extrémité du châssis de batteries (4;4';4") opposée à son interface de connexion avec le châssis de véhicule est grossièrement convexe, telle qu'observée depuis le dessus dudit châssis.

13. Véhicule selon l'une quelconque des revendications précédentes, **caractérisé en ce que** ledit châssis de batteries (4) est muni d'un dispositif de connexion (7) situé à l'arrière dudit châssis de batteries (4).

14. Véhicule selon l'une quelconque des revendications précédentes, dans lequel ledit logement (3) est défini sous l'extrémité arrière (Ar) du châssis du véhicule, **caractérisé en ce que**, en service, ledit châssis de batteries -(4') dépasse de l'arrière du véhicule et est muni d'un dispositif d'amortissement (9) et/ou d'absorption des chocs dans sa partie arrière.

15. Véhicule selon l'une quelconque des revendications précédentes, **caractérisé en ce que** le châssis de batteries supporte, en outre, un chargeur de batteries.

16. Véhicule selon l'une quelconque des revendications précédentes, **caractérisé en ce que** le châssis de batteries supporte, en outre, un dispositif de transformation d'énergie adapté à recharger lesdites batteries.

17. Véhicule selon l'une quelconque des revendications 1 à 16, **caractérisé en ce que** ledit moteur de traction est porté par ledit véhicule.

18. Véhicule selon l'une quelconque des revendications 1 à 16, **caractérisé en ce que** ledit moteur de traction est porté par ledit châssis de batteries, la force motrice étant transmise au véhicule via un arbre moteur.

19. Véhicule selon l'une quelconque des revendications 1 à 18, **caractérisé en ce qu'**il incorpore un moteur auxiliaire permettant de le déplacer indépendamment de sa connexion avec ledit châssis de batteries (4;4';4").

20. Véhicule selon l'une quelconque des revendications 1 à 18, **caractérisé en ce qu'**une réserve auxiliaire de batteries est prévue dans le véhicule.

## Claims

1. An autonomous electrically powered vehicle that requires, to power it, a significant mass and/or volume of batteries, said batteries (31) being supported by an independent chassis (4; 4'; 4") which is itself equipped with at least one axle fitted with wheels (5; 5') and which is designed to be accommodated in a housing (3) defined under the chassis of the vehicle, the battery chassis (4; 4'; 4") having a longitudinal plane of symmetry (X-X') perpendicular to its axle or axles and a transverse plane (Y-Y') perpendicular to said longitudinal plane, and connecting means being provided for connecting the battery chassis (4; 4'; 4") and the vehicle chassis, said connecting means comprising, on the one hand, locking means for locking the battery chassis (4; 4'; 4") and the vehicle chassis together and, on the other hand, an interface on the battery chassis (4'; 4'; 4") side and an interface on the vehicle chassis side including connectors for the transmission of power and/or commands or information, **characterized in that** said interfaces each further comprise the complementary male and female parts of at least one centering member and of at least one interconnection member, the interface on the vehicle chassis side consisting of a plate (10; 10') independent of said chassis and joined to it at least three points, two of which are controlled by rams (12) and the third of which adopts the form of a ball joint (13).

2. The vehicle as claimed in claim 1, **characterized in that** said rams (12) are slaved to the steering of the vehicle and/or to whether the vehicle is traveling forward or backing-up.

3. The vehicle as claimed in claim 1 or 2, **characterized in that** said centering member adopts the form of two complementary male (15) and female parts that interconnect with a taper.

4. The vehicle as claimed in any one of claims 1 to 3, **characterized in that** said interconnection member adopts the form of two complementary male (16) and female parts which interconnect in a cylindrical form.

5. The vehicle as claimed in any one of claims 1 to 4, **characterized in that** said centering member and said interconnection member consist of two distinct parts of the same piece (14; 14'; 14"; 29).

6. The vehicle as claimed in any one of claims 1 to 5, **characterized in that** said connection device comprises a pair of interconnection members and a pair of centering members, which pairs are symmetric with respect to the longitudinal plane (X-X') of the battery chassis (4; 4'; 4") .

7. The vehicle as claimed in any one of claims 1 to 6, **characterized in that** said locking member consists of a headed threaded rod (20; 20'; 20") which passes through the battery chassis (4; 4'; 4"), in a direction parallel to its longitudinal plane (X-X') or to its transverse plane (Y-Y'), and which can be secured to the interface plate (10; 10').

8. The vehicle as claimed in claim 7, **characterized in that** it comprises a pair of such headed threaded rods (20) designed to pass from end to end through the battery chassis (4) and the interface plate (10), parallel to the longitudinal plane (X-X') of the battery chassis (4; 4'; 4"), and to be held in place by screwing into a nut.

9. The vehicle as claimed in claims 6 and 8, considered together, **characterized in that** said threaded rods are coaxial with said interconnection and/or centering members and pass through them.

10. The vehicle as claimed in claim 7, **characterized in that** it comprises a threaded rod (20'; 20") designed to pass, parallel to the transverse plane (Z-Z') of the battery chassis (4; 4'; 4"), through the centering and/or interconnection member(s) and, from one lateral edge to the other, through the interface plate (10; 10'), whereas the complementary parts of said centering and/or interconnection members are coupled, said rod (20'; 20") being held in place by screwing into a nut.

11. The vehicle as claimed in any one of claims 1 to 10, **characterized in that** said connectors for transmitting power and/or commands or information are built into said at least one centering and/or interconnection member.

12. The vehicle as claimed in any one of the preceding claims, **characterized in that** the opposite end of the battery chassis (4; 4'; 4") to its interface for connection with the vehicle chassis is roughly convex, when said chassis is viewed from above.

13. The vehicle as claimed in any one of the preceding claims, **characterized in that** said battery chassis (4) is equipped with a connection device (7) situated at the rear of said battery chassis (4).

14. The vehicle as claimed in any one of the preceding claims, in which said housing (3) is defined under the rear end (Ar) of the vehicle chassis, **characterized in that**, in service, said battery chassis (4') protrudes beyond the rear of the vehicle and is equipped with a bumper (9) and/or impact absorption device in its rear part.

15. The vehicle as claimed in any one of the preceding claims, **characterized in that** the battery chassis furthermore supports a battery charger.

16. The vehicle as claimed in any one of the preceding claims, **characterized in that** the battery chassis furthermore supports an energy conversion device capable of recharging said batteries.

17. The vehicle as claimed in any one of claims 1 to 16, **characterized in that** said propulsion motor is carried by said vehicle.

18. The vehicle as claimed in any one of claims 1 to 16, **characterized in that** said propulsion motor is carried by said battery chassis, the motive power being transmitted to the vehicle via a driveshaft.

19. The vehicle as claimed in any one of claims 1 to 18, **characterized in that** it incorporates an auxiliary motor allowing it to be moved around independently of its connection to said battery chassis (4; 4'; 4").

20. The vehicle as claimed in any one of claims 1 to 18, **characterized in that** an auxiliary reserve of batteries is provided in the vehicle.

## Patentansprüche

1. Selbständiges elektrisches Zugfahrzeug, das für seine Versorgung eine große Batterienmasse und/oder ein großes Batterienvolumen erfordert, wobei diese Batterien (31) von einem unabhängigen Chassis (4; 4'; 4") getragen sind, das seinerseits mit mindestens einer mit Rädern (5; 5') bestückten Achse versehen ist und dafür ausgelegt ist, in einer unter dem Chassis des Fahrzeugs gebildeten Aufnahme (3) aufgenommen zu werden, wobei das Batterienchassis (4; 4'; 4") eine zu seiner oder seinen Achsen senkrechte Längssymmetrieebene (X-X') und eine zu dieser Längsebene senkrechte Querebene (Y-Y') besitzt und Verbindungsmittel zwischen dem Batterienchassis (4; 4'; 4") und dem Chassis des Fahrzeugs vorgesehen sind, wobei diese Verbindungsmittel einerseits Mittel zur Verriegelung zwischen dem Batterienchassis (4; 4'; 4") und dem Fahrzeugchassis und andererseits eine Schnittstelle auf der Seite des Batterienchassis (4; 4'; 4") und eine Schnittstelle auf der Seite des Fahrzeugchassis umfassen, die Abgriffe zur Übertragung von Energie und/oder von Steuerungen oder Informationen einschließen, **dadurch gekennzeichnet, dass** die Schnittstellen jeweils außerdem die sich ergänzenden Steck- und Aufnahmeteile mindestens eines Zentrierorgans und mindestens eines Steckorgans umfassen, wobei die fahrzeugchassisseitige Schnittstelle aus einer von diesem Chassis unabhängigen Platte (10; 10') besteht, die mit diesem an mindestens drei Punkten verbunden ist, von denen zwei durch Kolbenzylindereinheiten (12) gesteuert sind und von denen der dritte die Form eines Kugelgelenks (13) besitzt.

2. Fahrzeug nach Anspruch 1, **dadurch gekennzeichnet, dass** die Kolbenzylindereinheiten (12) durch die Lenkung und/oder den Vorwärtsgang/Rückwärtsgang des Fahrzeugs gesteuert werden.

3. Fahrzeug nach Anspruch 1 oder 2, **dadurch gekennzeichnet, dass** das Zentrierorgan die Form von zwei sich ergänzenden Steck- (15) und Aufnahmeteilen mit konischem Ineinandergriff besitzt.

4. Fahrzeug nach einem der Ansprüche 1 bis 3, **dadurch gekennzeichnet, dass** das Steckorgan die Form von zwei sich ergänzenden Steck- (16) und Aufnahmeteilen mit zylindrischem Ineinandergriff besitzt.

5. Fahrzeug nach einem der Ansprüche 1 bis 4, **dadurch gekennzeichnet, dass** das Zentrierorgan und das Steckorgan aus zwei verschiedenen Teilen ein und desselben Stücks (14; 14'; 14"; 29) bestehen.

6. Fahrzeug nach einem der Ansprüche 1 bis 5, **dadurch gekennzeichnet**, die Verbindungsvorrichtung ein Paar von Steckorganen und ein Paar von Zentrierorganen umfasst, wobei diese Paare bezüglich der Längsebene (X-X') des Batterienchassis (4; 4'; 4") symmetrisch sind.

7. Fahrzeug nach einem der Ansprüche 1 bis 6, **dadurch gekennzeichnet, dass** das Verriegelungsorgan aus einer mit Gewinde und Kopf versehenen Stange (20; 20'; 20") besteht, die das Batterienchassis (4; 4'; 4") in einer zu seiner Längsebene (X-X') oder zu seiner Querebene (Y-Y') parallelen Richtung durchquert und mit der Schnittstellenplatte (10; 10') fest verbindbar ist.

8. Fahrzeug nach Anspruch 7, **dadurch gekennzeichnet, dass** es ein Paar von solchen mit Gewinde und Kopf versehenen Stangen (20) besitzt, die dafür ausgelegt sind, ganz das Batterienchassis (4) und die Schnittstellenplatte (10) parallel zur Längsebene (X-X') des Batterienchassis (4; 4'; 4") zu durchqueren und durch Einschrauben in eine Mutter an ihrem Platz blockiert zu werden.

9. Fahrzeug nach den Ansprüchen 6 und 8 zusammen, **dadurch gekennzeichnet, dass** die mit Gewinde versehenen Stangen zu den Steck- und/oder Zentrierorganen koaxial sind und sie durchqueren.

10. Fahrzeug nach Anspruch 7, **dadurch gekennzeichnet, dass** es eine mit Gewinde versehene Stange (20'; 20") umfasst, die dafür ausgelegt ist, parallel zu der Querebene (Z-Z') des Batterienchassis (4; 4'; 4") das oder die Zentrier- und/oder Steckorgane und, von einem Seitenrand zum anderen, die Schnittstellenplatte (10; 10') zu durchqueren, während die sich ergänzenden Teile der Zentrier- und/oder Steckorgane gekoppelt sind, wobei die Stange (20'; 20") in ihrer Stelle durch Einschrauben in eine Mutter blockierbar ist.

11. Fahrzeug nach einem der Ansprüche 1 bis 10, **dadurch gekennzeichnet, dass** die Abgriffe zur Übertragung von Energie und/oder von Steuerungen oder Informationen in das mindestens eine Zentrier- und/oder Steckorgan integriert sind.

12. Fahrzeug nach einem der vorhergehenden Ansprüche, **dadurch gekennzeichnet, dass** das Ende des Batterienchassis (4; 4'; 4"), das seiner Schnittstelle zur Verbindung mit dem Fahrzeugchassis entgegengesetzt ist, grob konvex ist, wenn das Chassis von unten betrachtet wird.

13. Fahrzeug nach einem der vorhergehenden Ansprüche, **dadurch gekennzeichnet, dass** das Batterienchassis (4) mit einer Verbindungsvorrichtung (17) versehen ist, die am Heck des Batterienchassis (4) gelegen ist.

14. Fahrzeug nach einem der vorhergehenden Ansprüche, bei dem die Aufnahme (3) unter dem Heckende (Ar) des Fahrzeugchassis gebildet ist, **dadurch gekennzeichnet, dass** das Batterienchassis (4') in Betrieb am Heck des Fahrzeugs vorsteht und mit einer Vorrichtung (9) zur Dämpfung und/oder Absorption der Stöße in seinem Heckteil versehen ist.

15. Fahrzeug nach einem der vorhergehenden Ansprüche, **dadurch gekennzeichnet, dass** das Batterienchassis außerdem einen Batterienlader trägt.

16. Fahrzeug nach einem der vorhergehenden Ansprüche, **dadurch gekennzeichnet, dass** das Batterienchassis außerdem eine Vorrichtung zur Umwandlung von Energie trägt, die dafür ausgelegt ist, die Batterien nachzuladen.

17. Fahrzeug nach einem der Ansprüche 1 bis 16, **dadurch gekennzeichnet, dass** der Zugmotor von dem Fahrzeug getragen ist.

18. Fahrzeug nach einem der Ansprüche 1 bis 16, **dadurch gekennzeichnet, dass** der Zugmotor von dem Batterienchassis getragen ist, wobei die Antriebskraft auf das Fahrzeug über eine Antriebswelle übertragen wird.

19. Fahrzeug nach einem der Ansprüche 1 bis 18, **dadurch gekennzeichnet, dass** in es ein Hilfsmotor eingegliedert ist, der es gestattet, es unabhängig von seiner Verbindung mit dem Batterienchassis (4; 4'; 4") zu bewegen.

20. Fahrzeug nach einem der Ansprüche 1 bis 18, **dadurch gekennzeichnet, dass** in dem Fahrzeug eine Hilfsbatterienreserve vorgesehen ist.
